# EUROPEAN PATENT APPLICATION

(11) **EP 3 159 561 A1**
(43) Date of publication of application: **26.04.2017**
(21) Application number: 15306686.5
(22) Date of filing: 21.10.2015
(51) Int. Cl.: F16C 33/66, F16C 33/58, F16C 19/18

(54) **BEARING DEVICE, NOTABLY FOR A TURBOCHARGER**

(71) Applicant: Aktiebolaget SKF, 415 50 Göteborg (SE)
(72) Inventor: GHILBERT SIMON, Aurélien, 37390 SAINT-ROCH (FR); HINGOUET, Gwenaël, 37540 SAINT CYR SUR LOIRE (FR); WANG, Jun, 2645HK DELFGAUW (NL)
(74) Representative: Tweedlie, Diane Harkness

(57) **Abstract**

Bearing device (10), notably for turbocharger, comprising at least one inner ring (14), at least one outer ring (12, 37), at least one row of rolling elements (16a, 16b) arranged between raceways (12e, 14g; 12f, 14h) provided on the inner and outer rings and at least one lubricant supply hole (20a, 20b) extending through the thickness of the outer ring (12) from an outer surface (12a) of the outer ring to the inner bore (12d) of said outer ring.

The inner bore (12d) of the outer ring (12) comprises a first cylindrical surface (26a, 26b) having a first diameter (D1), into which emerge the lubricant supply hole (20a, 20b) and a lubricant retaining means (27a, 27b) projecting inwards from the first cylindrical surface (26a, 26b), so as to axially retain the lubricant, said lubricant supply hole (20a, 20b) being located between the row of rolling elements (16a, 16b) and the lubricant retaining means (27a, 27b).

## Description

The present invention relates to the field of bearing devices, for example rolling bearings having an inner ring, an outer ring and one or more rows of rolling elements held by a cage between raceways provided on the two rings. The bearing devices may be, for example, those used in a turbocharger, and in particular turbochargers used in combustion engines for automotive vehicles.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of exhaust gases, the shaft and the compressor wheel are rotated which leads to a compression of the admission gases introduced into the cylinders of the combustion engine.

The engine oil may be used for the lubrication of the rolling bearing. However, when the combustion engine stops, the delivery of engine oil is shut off. This causes a strong temperature increase of the residual oil located between the shaft and the rolling bearing near to the turbine wheel. The cooling of said rolling bearing is thus not satisfactory.

Known bearing devices or cartridges comprise a lubricant inlet hole for supplying lubricant towards the rolling elements, and the outer ring bore generally comprises a step between the lubricant inlet hole and the row of rolling elements to lubricate.

Such bearing cartridges fails endurance test at high rotation speed, because of the thin lubricant film located at the rolling contact area. Indeed, lubricant entering inside the bearing cartridge is centrifuged on the outer ring bore and tends to flow at the opposite direction compared to the row of rolling elements.

One aim of the present invention is therefore to overcome the aforementioned drawbacks.

It is a particular object of the present invention to provide a bearing device or cartridge in which the lubrication of the row of rolling elements is improved during use, notably operating at high rotation speed, such as 250000rpm and which is simple to manufacture and economic.

In one embodiment, a bearing device, notably for turbocharger, comprises at least one inner ring, at least one outer ring, at least one row of rolling elements arranged between raceways provided on the inner and outer rings, and at least one lubricant supply hole extending through the thickness of the outer ring from an outer surface of the outer ring to the inner bore of said outer ring.

The inner bore of the outer ring comprises a first cylindrical surface, having a first diameter, into which emerge the lubricant supply hole and lubricant retaining means projecting inwards from the first cylindrical surface, so as to axially retain the lubricant. Said lubricant supply hole is located between the row of rolling elements and the lubricant retaining means, so that the path between the lubricant supply hole and the row of rolling elements to lubricated is straight and thus deprived from any obstacle.

There is thus no obstacle between the lubricant supply hole and the row of rolling elements. Furthermore, a lubricant chamber is delimited between the row of rolling elements and the lubricant retaining means. The flow of lubricant coming from the lubricant supply hole is thus directed straight towards the row of rolling elements, increasing the lubrication of the rolling contact area.

According to an embodiment, the lubricant retaining means is a shoulder, having a second diameter, the ratio between the first and second diameters being comprised between 1 and 1,2, for example equal to 1,1.

According to another embodiment, the lubricant retaining means is a radial portion radially extending from the first cylindrical surface inward and having a third diameter. The ratio between the first and third diameters being comprised between 1 and 1,2, for example equal to 1,1.

According to another embodiment, the lubricant retaining means is an annular ring mounted in an annular groove provided on the bore of the outer ring.

According to another embodiment, the bearing device comprises two rows of rolling elements arranged between the inner and outer rings, at least two lubricant supply holes provided in the thickness of the outer ring, each lubricant supply hole being located at the vicinity of the corresponding row of rolling elements and two lubricant retaining means, each lubricant supply hole being located between the corresponding row of rolling elements and the corresponding lubricant retaining means.

According to another embodiment, the outer ring and the outer casing are the same element, the raceway(s) for the rolling elements are thus provided directly on the bore of the outer casing.

According to another embodiment, the bearing device comprises a lubricant chamber axially delimited between the retaining means and the row of rolling elements and radially delimited between the first cylindrical surface, of first diameter, and an outer surface of the inner ring, at the vicinity of the first row of rolling elements.

According to another embodiment, the bearing device comprises two inner rings and an axial spacer axially located between the inner rings.

According to another embodiment, the outer ring comprises a first and a second ring each provided with a raceway for a row of rolling elements and an outer casing surrounding said first and second rings.

According to another embodiment, the bearing device comprises a first lubricant chamber axially delimited between the first retaining means and the first row of rolling elements and radially delimited between the first cylindrical surface, of first diameter and an outer surface of the axial spacer, at the vicinity of the first row of rolling elements, and a second lubricant chamber axially delimited between the second retaining means and the second row of rolling elements and radially delimited between the first cylindrical surface, of first diameter, and the outer surface of the axial spacer, at the vicinity of the second row of rolling elements.

According to another aspect, the invention relates to a turbocharger comprising a shaft, a housing, a turbine wheel and a compressor wheel mounted onto the shaft, and at least one bearing device as previously described arranged between the shaft and the housing.

The present invention and its advantages will be better understood by studying the detailed description of specific embodiments given by way of non-limiting examples and illustrated by the appended drawings on which
- Figure 1 is an axial section of a bearing cartridge according to a first embodiment of the invention;
- Figure 2 is an axial section of a bearing cartridge according to a second embodiment of the invention; and
- Figure 3 is an axial section of a bearing cartridge according to a third embodiment of the invention.

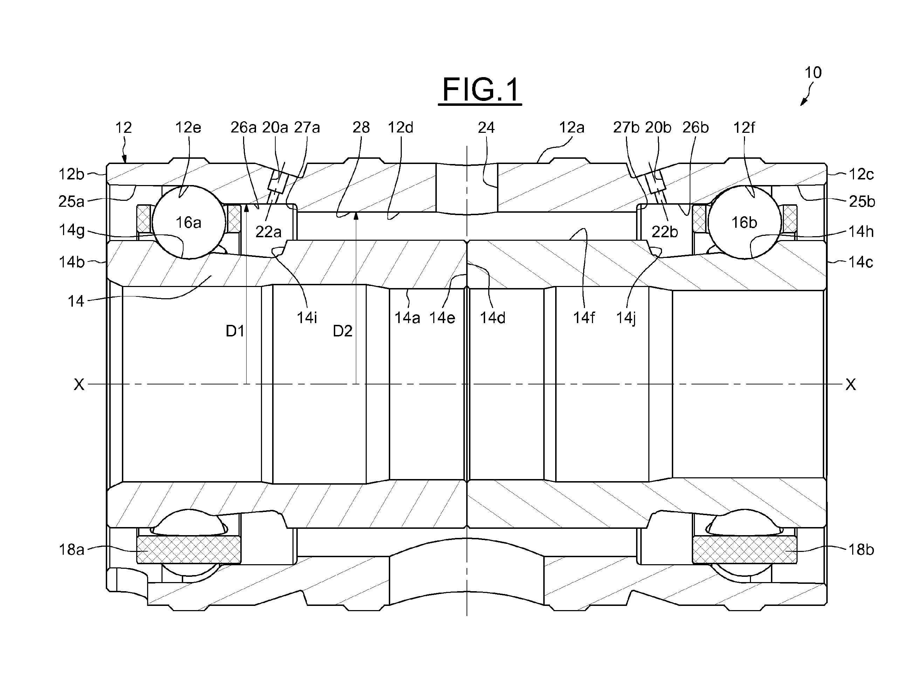

Figures 1 to 3 show three embodiments of a bearing device or cartridge, extending along a longitudinal rotation axis X-X, and designed to be used in a turbocharger of an automotive vehicle and to be radially mounted between a shaft carrying turbine and compressor wheels and a housing of said turbocharger.

As illustrated on Figure 1, the bearing device 10 comprises a cylindrical outer ring or casing 12 and an inner ring or shaft 14 between which are housed two rows of rolling elements 16a, 16b, for example balls. The bearing device comprises two annular cages 18a, 18b maintaining the circumferential spacing of the rolling elements 16a, 16b. The axis X-X of the bearing device 10 is coaxial with the axis of the shaft (not shown) of the turbocharger.

The outer casing 12 and the inner ring 14 are concentric and symmetric with respect to a transverse radial plane passing through the centre of the bearing device 10. The outer casing 12 acts as an outer ring for the rolling elements 16a, 16b. The outer casing 12 and the inner ring 14 are of the solid type. A "solid type ring" is to be understood as a ring obtained by machining with removal of material (by machining, grinding) from metal tube stock, bar stock, rough forgings and/or rolled blanks.

The outer casing 12 comprises an outer cylindrical surface 12a mounted radially into an opening of the turbocharger's housing (not shown) and delimited by opposite radial lateral surfaces 12b, 12c, which respectively axially come into contact with said housing. The outer casing 12 also comprises a bore 12d of cylindrical shape from which are formed toroidal raceways 12e, 12f having in cross-section a concave internal profile adapted to the rolling elements 16a, 16b. The raceways 12e, 12f are symmetrical with respect to the transverse radial plane passing through the centre of the bearing device 10.

In the disclosed embodiment, the inner ring 14 is made of two parts which are identical, symmetrical with respect to the transverse radial plane passing through the centre of the bearing device 10, and mounted axially fixedly one against the other. Alternatively, the two parts of the inner ring 14 may be axially spaced by a spacer (not shown). The inner ring 14 is here composed of two identical half rings. Alternatively, the inner ring 14 may be made in one part. The inner ring 14 has a bore 14a of cylindrical shape into which the turbocharger shaft (not shown) is mounted. Said bore 14a is delimited by opposite radial outer lateral surfaces 14b, 14c which are respectively coplanar with the lateral surfaces 12b, 12c of the outer casing 12. Each part or half-ring of the inner ring 14 comprises a radial inner lateral surface 14d, 14e axially bearing against the corresponding lateral surface of the other half-ring of said inner ring 14.

As illustrated, the inner ring 14 comprises an outer cylindrical surface 14f onto which first and second toroidal raceways 14g, 14h are formed. The said toroidal raceways 14g, 14h have in cross-section a concave internal profile adapted to the rolling elements 16a, 16b, said raceways being directed outwards. The raceways 14g, 14h are symmetrical with respect to the transverse radial plane passing through the centre of the bearing device 10.

As illustrated on Figure 1, the outer casing 12 comprises two lubricant supply holes 20a, 20b provided in the thickness of the outer casing 12, for supplying lubricant into a chamber 22a, 22b formed between the outer casing 12 and the inner ring 14. The lubricant supply holes 20a, 20b are symmetrical with respect to the transverse radial plane passing through the centre of the bearing device 10. The lubricant may be oil, for example oil of a combustion engines when the bearing device is used in a turbocharger for automotive vehicles.

The lubricant forms an oil film between an outer peripheral surface of the inner ring 12 and the inner bore of the outer casing 11.

The first lubricant hole 20a extends from the outer surface 12a of the casing 12 to the bore 12d of the casing, at the axial vicinity of the first raceways 12e, 14g. The second lubricant hole 20b extends from the outer surface 12a of the casing 12 to the bore 12d of the casing, at the axial vicinity of the second raceways 12f, 14h. The lubricant holes 20a, 20b are both axially located between the rolling elements 16a, 16b. Each lubricant holes 20a, 20b have an axis inclined with respect to the transverse radial plane passing through the centre of the bearing device 10. As illustrated, a unique lubricant hole 20a, 20b is designed to supply lubricant to a corresponding bearing. As an alternative, a plurality of lubricant holes may be provided to supply lubricant to corresponding raceways. Said outer casing 12 further comprises an exit hole 24 provided in the thickness of the outer casing, axially between the lubricant holes.

As illustrated on Figure 1, the stepped bore 12d of the outer casing 12 comprises a cylindrical surface 25a, 25b located at each axial end of the bore 12d, axially extending by the corresponding raceway 12e, 12f. The bore 12d further comprises a cylindrical surface 26a, 26b having a first diameter D1, extending axially from the corresponding raceway towards the inside and into which emerge the corresponding lubricant hole 20a, 20b. Thanks to the cylindrical surface 26a, 26b being of straight shape, the flow of lubricant emerging from the supply hole can thus flow towards the corresponding row of rolling elements without being stopped by any obstacle.

The stepped bore 12d further comprises a step surface 27a, 27b radially extending from the cylindrical surface 26a, 26b inwards, and forming a shoulder. The step surface 27a, 27b axially extends by a cylindrical surface 28 having a second diameter D2. The ratio between the diameters D1/D2 of the cylindrical surfaces 26a, 26b, 28 is comprises between 1 and 1.2, for example 1.1. (Please confirm)

The outer casing 12 is symmetrical relative to the transverse radial plane of symmetry of the bearing device 10.

The shoulders 27a, 27b are both located between the raceways 12e, 12f.

The first chamber 22a for the lubricant is axially delimited between the first step surface 27a and the first row of rolling elements 16a and radially delimited between the cylindrical surface 26a of small diameter D1 and the outer surface 14f of the inner ring, at the vicinity of the first row of rolling elements 16a.

The second chamber 22b for the lubricant is axially delimited between the second step surface 27b and the second row of rolling elements 16b and radially delimited between the cylindrical surface 26b of small diameter D1 and the outer surface 14f of the inner ring, at the vicinity of the second row of rolling elements 16b.

As illustrated, the inner ring 14 also comprises a shoulder 14i, 14j, located between the rolling elements 16a, 16b and designed to delimit axially the corresponding lubricant chamber 22a, 22b.

Thanks to the step surfaces 27a, 27b, the lubricant flow is directed towards the corresponding raceway and may properly lubricate the raceways. Furthermore, the chamber 22a, 22b may act as a lubricant reservoir.

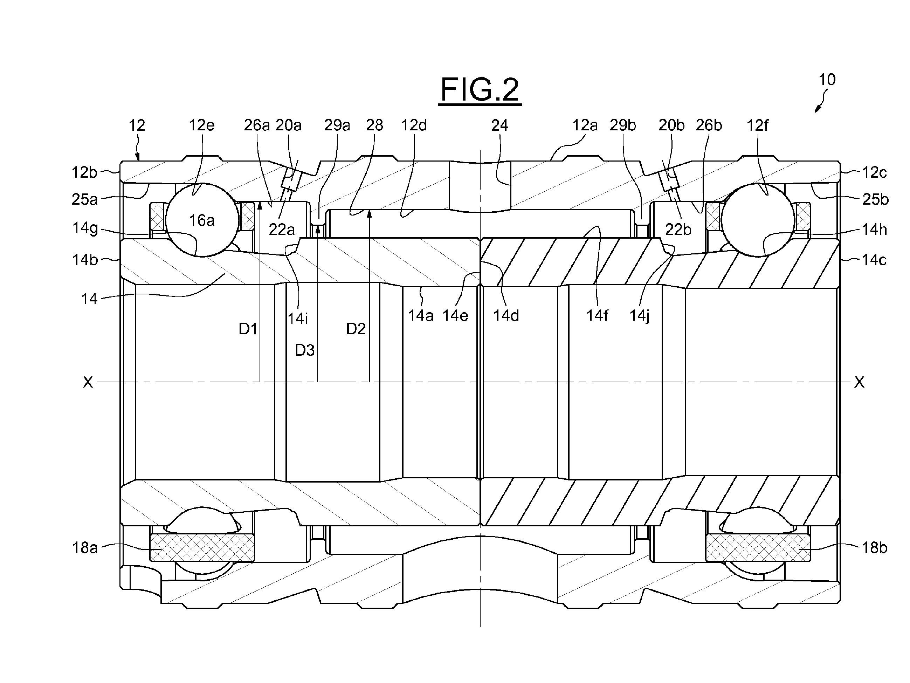

Figure 2 in which identical parts are given identical references, illustrates another example of the outer ring or casing 12 of Figure 1.

As illustrated on Figure 2, the stepped bore 12d of the outer casing 12 comprises a cylindrical surface 25a, 25b located at each axial end of the bore 12d, axially extending by the corresponding raceway 12e, 12f. The bore 12d further comprises a cylindrical surface 26a, 26b having a first diameter D1, extending axially from the corresponding raceway towards the inside and into which emerge the corresponding lubricant hole 20a, 20b. The stepped bore 12d of the outer casing 12 further comprises two radial portions 29a, 29b radially extending from the cylindrical surface 26a, 26b towards the outer surface 14f of the inner ring 12 and forming a shoulder. The radial portions 29a, 29b are axially separated from each other by a cylindrical surface 28 of diameter D2 and are symmetrical with one another relative to the transverse radial plane of symmetry of the bearing device 10. The radial portions 29a, 29b are both located between the raceways 12e, 12f.

The first radial portion 29a extends from the bore 12d of the casing 12 towards the outer surface 14f of the inner ring 14, at the axial vicinity of the first row of rolling elements 16a. The second radial portion 29b extends from the bore 12d of the casing towards the outer surface 14f of the inner ring 14, at the axial vicinity of the second row of rolling elements 16b.

Each of the radial portions 29a, 29b has a third diameter D3. The ratio between the diameters D1/D3 is comprises between 1 and 1.2, for example 1.1.

As illustrated, each radial portion 29a, 29b forms a step having an axis of 90° with respect to the axis X-X of the bearing device 10. As an alternative, the radial portions may be of any shape, so as to form a radial protuberance extending from the bore of the outer casing towards the inner ring, in order to retain a part of the lubricant flow tending to flow ate the opposite direction compared to the raceways. As illustrated, the lateral surface of the radial portions, at the vicinity of the corresponding row of rolling elements, is smooth. As an alternative, the lateral surface of the radial portions, at the vicinity of the corresponding row of rolling elements may be provided with grooves, or an axial portion, so as to retain the lubricant. As an alternative, the radial portions may be replaced by an annular ring or circplips mounted in an annular groove provided on the bore 12d of the outer casing.

The first chamber 22a for the lubricant is axially delimited between the first radial portion 29a and the first row of rolling elements 16a and radially delimited between the cylindrical surface 26a of small diameter D1 and the outer surface 14f of the inner ring, at the vicinity of the first row of rolling elements 16a.

The second chamber 22b for the lubricant is axially delimited between the second radial portion 29b and the second row of rolling elements 16b and radially delimited between the cylindrical surface 26b of small diameter D1 and the outer surface 14f of the inner ring, at the vicinity of the second row of rolling elements 16b.

As illustrated, the inner ring 14 also comprises a shoulder 14i, 14j, located between the rolling elements 16a, 16b and designed to delimit axially the corresponding lubricant chamber 22a, 22b.

Thanks to the radial portions 29a, 29b, the lubricant flow is directed towards the corresponding row of rolling elements and may properly lubricate the raceways. Furthermore, the chamber 22a, 22b may act as a lubricant reservoir for the corresponding row of rolling elements.

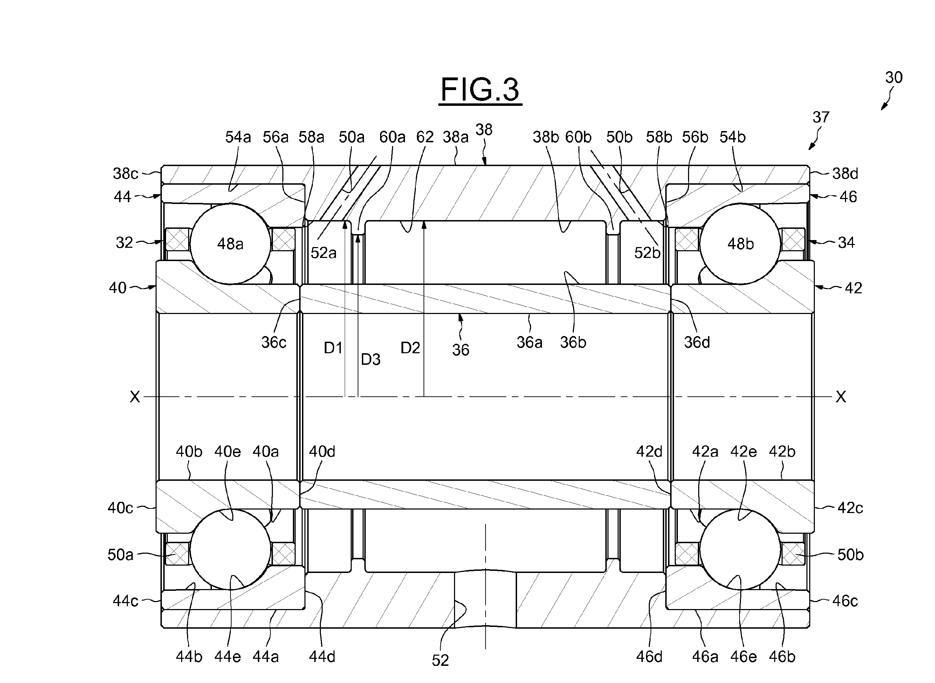

As illustrated on Figure 3, the bearing device 30 comprises first and second bearings 32, 34 spaced axially by an inner spacer 36. The axis X-X of the bearing device 30 is coaxial with the axis of the shaft (not shown) of the turbocharger

In the disclosed embodiment, the bearings 32, 34 are, symmetrical with respect to the transverse radial plane passing through the centre of the bearing device 30. The bearing device comprises two inner rings 40, 42 spaced axially by an inner spacer 36, an outer ring 37, two rows of rolling elements 48a, 48b, for example balls between raceways 40e, 44e, 42e, 46e provided on the inner and outer rings. The bearing device comprises two annular cages 50a, 50b maintaining the circumferential spacing of the rolling elements 48a, 48b.

The outer ring 37 comprises a cylindrical outer casing 38, and first and second rings 44, 46 mounted in said cylindrical outer casing 38.

The inner rings and the first and second rings of each bearing 32, 34 are concentric. In the disclosed embodiment, the said rings are of the solid type. A "solid type ring" is to be understood as a ring obtained by machining with removal of material (by machining, grinding) from metal tube stock, bar stock, rough forgings and/or rolled blanks.

Each of the first and second rings 44, 46 comprises an outer axial cylindrical surface 44a, 46a, mounted into the outer casing 38, an axial bore 44b, 46b, of cylindrical shape, delimited by opposite radial outer lateral surfaces 44c, 46c and radial inner lateral surfaces 44d, 46d. Each first and second rings 44, 46 also comprises toroidal raceways 44e, 46e formed on the axial bore 44b, 46b and having in cross-section a concave internal profile adapted to the rolling elements 48a, 48b, said raceways being directed inwards. The raceways 44e, 46e are symmetrical with respect to the transverse radial plane passing through the centre of the bearing device 30.

The inner ring 40, 42 of each bearing 32, 34 comprises an outer axial cylindrical surface 40a, 42a, an axial bore 40b, 42b, of cylindrical shape, delimited by opposite radial outer lateral surfaces 40c, 42c and radial inner lateral surfaces 40d, 42d. The inner ring 40, 42 of each bearing also comprises toroidal raceways 40e, 42e formed on the outer axial cylindrical surface 40a, 42a and having in cross-section a concave internal profile adapted to the rolling elements 48a, 48b, said raceways being directed outwards. The raceways 40e, 42e are symmetrical with respect to the transverse radial plane passing through the centre of the bearing device 30.

The inner spacer 36 has an annular sleeve shape and is coaxial with the longitudinal axis X-X of the bearing device 30. The inner spacer 36 is axially mounted between the inner rings 40, 42 of the bearings 32, 34 and comes axially in contact with the inner rings 40, 42. The inner spacer 36 comprises an axial bore 36a, of cylindrical shape, an outer axial cylindrical surface 36b delimited by opposite radial lateral surfaces 36c, 36d. The lateral surface 36c of the inner spacer 36 comes axially in contact with the inner lateral surfaces 40d of the inner ring 40 of the first bearing 32 and the lateral surface 36d of the inner spacer 36 comes axially in contact with the inner lateral surfaces 42d of the inner ring 42 of the second bearing 34.

The outer casing 38 has an annular shape and is coaxial with the longitudinal axis X-X of the bearing device 30. The outer casing 38 act as a housing for the first and second rings. The outer casing 38 comprises an outer cylindrical surface 38a mounted radially into an opening of the turbocharger's housing (not shown), a stepped bore 38b and opposite radial lateral surfaces 38c, 38d axially delimiting said bore and said outer surface. The radial lateral surfaces 38c, 38d of the outer casing are respectively coplanar with the outer lateral surfaces 44c, 46c of the first and second rings 44, 46. The outer surface 44a, 46a of the first and second rings 44, 46 comes radially in contact with the bore 38b of the outer casing 38.

As illustrated on Figure 3, the outer casing 38 comprises two lubricant supply holes 50a, 50b, provided in the thickness of the outer casing 38, for supplying lubricant into a chamber 52a, 52b formed between the outer casing 38 and the inner spacer 36, and thus to the bearings 32, 34. The lubricant supply holes 50a, 50b are symmetrical with respect to the transverse radial plane passing through the centre of the bearing device 30. The lubricant may be oil, for example oil of a combustion engines when the bearing device is used in a turbocharger for automotive vehicles. The first lubricant hole 50a extends from the outer surface 38a of the casing 38 to the bore 38b of the casing, at the axial vicinity of the first row of rolling elements 48a. The second lubricant hole 50b extends from the outer surface 38a of the casing 38 to the bore 38b of the casing, at the axial vicinity of the second row of rolling elements 48b. The lubricant holes 50a, 50b are both located between the raceways. Each lubricant holes 50a, 50b have an axis inclined with respect to the transverse radial plane passing through the centre of the corresponding bearing 32, 34. As illustrated, a unique lubricant hole 50a, 50b is designed to supply lubricant to a corresponding row of rolling elements. As an alternative, a plurality of lubricant holes may be provided to supply lubricant to a corresponding row of rolling elements.

Said outer casing 38 further comprises an exit hole 52 provided in the thickness of the outer casing, axially between the lubricant holes.

As illustrated on Figure 3, the bore 38b of the outer casing 38 comprises a cylindrical surface 54a, 54b located at each axial end of the bore 38b, against which bears axially respectively the first and second rings 44, 46. The bore 38b further comprises a step 56a, 56b radially extending from the cylindrical surface 54a, 54b inwards and forming an axial stop for said first and second rings. The step 56a, 56b axially extends by a cylindrical surface 58a, 58b of small diameter D1 into which emerge the corresponding lubricant hole 50a, 50b.

The bore 38b of the outer casing further comprises two radial portions 60a, 60b extending radially from the bore 38b towards the outer surface 36b of the inner spacer 36 and forming a shoulder. The radial portions 60a, 60b are axially separated from each other by a cylindrical surface 62 of diameter D2 and are symmetrical with one another relative to the transverse radial plane of symmetry of the bearing device 30.

The radial portions 60a, 60b are both located between the rows of rolling elements 48a, 48b. The first radial portion 60a extends from the bore 38b of the casing towards the outer surface 36b of the inner spacer 36, at the axial vicinity of the first row of rolling elements 48a. The second radial portion 60b extends from the bore 38b of the casing towards the outer surface 36b of the inner spacer 36, at the axial vicinity of the second row of rolling elements 48b.

Each of the radial portions 60a, 60b has a third diameter D3. The ratio between the diameters D1/D3 is comprises between 1 and 1.2, for example 1.1.

As illustrated, each radial portion 60a, 60b forms a step having an axis of 90° with respect to the axis X-X of the bearing device 30. As an alternative, the radial portions may be of any shape, so as to form a radial protuberance extending from the bore of the outer casing towards the inner spacer. As illustrated, the lateral surface of the radial portions, at the vicinity of the corresponding row of rolling elements, is smooth. As an alternative, the lateral surface of the radial portions, at the vicinity of the corresponding bearing may be provided with grooves, or a step, so as to retain the lubricant. As an alternative, the radial portions may be replaced by an annular ring or circplips mounted in an annular groove provided on the bore 38b of the outer casing.

The first chamber 52a for the lubricant is axially delimited between the first radial portion 60a and the first row of rolling elements and radially delimited between the cylindrical surface 58a of small diameter D1 and the outer surface 36b of the inner spacer, at the vicinity of the first row of rolling elements 48a.

The second chamber 52b for the lubricant is axially delimited between the second radial portion 60b and the second row of rolling elements and radially delimited between the cylindrical surface 58b of small diameter D1 and the outer surface 36b of the inner spacer, at the vicinity of the second row of rolling elements 48b.

Thanks to the radial portions 60a, 60b, the lubricant flow is directed towards the corresponding row of rolling elements and may properly lubricate the raceways. Furthermore, the chamber 52a, 52b may act as a lubricant reservoir for the corresponding row of rolling elements.

It should be noted that the embodiment of Figure 1 may be modified in order to have two inner rings axially spaced by an axial spacer and an outer ring comprising first and second rings and an outer casing inside which are mounted the first and second rings, as illustrated on Figure 3.

Thanks to the present invention, the lubrication of the rolling contact area is improved. Furthermore, some lubricant may be trapped in the chambers, closed to the raceways, which may increase the lubricant film thickness at the rolling contact area, which increases the bearing service life.

It should be noted that the embodiments, illustrated and described were given merely by way of non-limiting indicative examples and that modifications and variations are possible within the scope of the invention.

The invention has been illustrated on the basis of a turbocharger comprising a rolling bearing provided with at least one row of rolling elements radially disposed between the inner and outer rings. Alternatively, the bearing may be a plain bearing or a sliding bearing comprising one or two rings.

Finally, is has to be made clear that by a turbocharger, it is also meant a waste heat recovery turbine, a turbocompound or a compressor.

## Claims

1. Bearing device (10, 30), notably for turbocharger, comprising at least one inner ring (14, 40, 42), at least one outer ring (12, 37), at least one row of rolling elements (16a, 16b; 48a, 48b) arranged between raceways (12e, 14g; 12f, 14h; 40e, 44e; 42e, 46e) provided on the inner and outer rings, and at least one lubricant supply hole (20a, 20b; 50a, 50b) extending through the thickness of the outer ring (12, 37) from an outer surface (12a, 38a) of the outer ring to the inner bore (12d, 38b) of said outer ring, **characterized in that** the inner bore (12d, 38b) of the outer ring (12, 37) comprises a first cylindrical surface (26a, 26b, 58a, 58b), having a first diameter (D1), into which emerge the lubricant supply hole (20a, 20b; 50a, 50b) and lubricant retaining means (27a, 27b; 29a, 29b; 60a, 60b) projecting inwards from the first cylindrical surface (26a, 26b, 58a, 58b), so as to axially retain the lubricant, said lubricant supply hole (20a, 20b; 50a, 50b) being located between the row of rolling elements (16a, 16b; 48a, 48b) and the lubricant retaining means (27a, 27b; 29a, 29b; 60a, 60b).

2. Bearing device according to claim 1, wherein the lubricant retaining means (27a, 27b) is a shoulder, having a second diameter (D2), the ratio (D1/D2) between the first and second diameters being comprised between 1 and 1,2.

3. Bearing device according to claim 2, wherein the ratio (D1/D2) between the first and second diameters is equal to 1,1.

4. Bearing device according to claim 1, wherein the lubricant retaining means (29a, 29b; 50a, 50b) is a radial portion radially extending from the first cylindrical surface (26a, 26b; 58a, 58b) inwards, having a third diameter (D3), the ratio (D1/D3) between the first and third diameters being comprised between 1 and 1,2.

5. Bearing device according to claim 4, wherein the ratio (D1/D3) between the first and third diameters is equal to 1,1.

6. Bearing device according to claim 1, wherein the lubricant retaining means is an annular ring mounted in an annular groove provided on the bore of the outer ring.

7. Bearing device according to any of the preceding claims, comprising two rows of rolling elements (16a, 16b; 48a, 48b) arranged between the inner and outer rings, at least two lubricant supply holes (20a, 20b; 50a, 50b) provided in the thickness of the outer ring, each lubricant supply hole being located at the vicinity of the corresponding row of rolling elements (16a, 16b; 48a, 48b) and two lubricant retaining means (27a, 27b; 29a, 29b; 60a, 60b), each lubricant supply hole being located between the corresponding row of rolling elements and the corresponding lubricant retaining means.

8. Bearing device according to any of the preceding claims, comprising a lubricant chamber (22a, 22b) axially delimited between the retaining means (27a, 27b; 29a, 29b) and the row of rolling elements (16a, 16b) and radially delimited between the first cylindrical surface (26a, 26b) and an outer surface (14f) of the inner ring (14), at the vicinity of the row of rolling elements (16a, 16b).

9. Bearing device according to claim 7, comprising two inner rings (40, 42) and an axial spacer (36) axially located between the inner rings (40, 42).

10. Bearing device according to claim 9, wherein the outer ring (37) comprises a first and a second ring (44, 46) each provided with a raceway (40e, 44e; 42e, 46e) for a row of rolling elements (48a, 48b) and an outer casing (38) surrounding said first and second rings (44, 46).

11. Bearing device according to claim 9 or 10, comprising a first lubricant chamber (52a) axially delimited between the first retaining means (60a) and the first row of rolling elements (48a) and radially delimited between the first cylindrical surface (58a) and an outer surface (36b) of the axial spacer (36), at the vicinity of the first row of rolling elements (48a), and a second lubricant chamber (52b) axially delimited between the second retaining means (60b) and the second row of rolling elements (48b) and radially delimited between the first cylindrical surface (58b) and the outer surface (36b) of the axial spacer (36), at the vicinity of the second row of rolling elements (48b).

12. Turbocharger comprising a shaft, a housing, a turbine wheel and a compressor wheel mounted onto the shaft, and at least one bearing device (10, 30) according to any of the preceding claims arranged between the shaft and the housing.
